# FASCICULE DE BREVET EUROPEEN

(11) **EP 1 317 697 B1**
(45) Date de publication et mention de la délivrance du brevet: **16.06.2004**
(21) Numéro de dépôt: 01969908.1
(22) Date de dépôt: 17.09.2001
(51) Int. Cl.: G05B 19/418, G07C 3/04

(54) **SYSTEME PERFECTIONNE DE SUIVI DE PRODUCTION ASSISTE PAR ORDINATEUR**
VERBESSERTES SYSTEM ZUM RECHNERGESTÜTZTEN VERFOLGEN DER HERSTELLUNG
IMPROVED COMPUTER-AIDED SYSTEM FOR MONITORING PRODUCTION

(30) Priorité: 15.09.2000 FR 0012202; 19.04.2001 FR 0105285
(43) Date de publication de la demande: 11.06.2003
(73) Titulaire: Avensy Ingenierie, 25000 Besancon (FR)
(72) Inventeur: LABOURIER, Raphael, F-25000 Besancon (FR)
(74) Mandataire: Bruder, Michel
(86) Numéro de dépôt international: PCT/FR2001/002883
(87) Numéro de publication internationale: WO 2002/023294

(56) Documents cités:
- EP-A- 0 160 317
- EP-A- 0 977 099
- DE-A- 19 846 596
- US-A- 4 956 783
- US-A- 5 446 672
- US-A- 6 021 437
- FUHR P L ET AL: "REMOTE INTERROGATION AND CONTROL OF SENSORS VIA THE INTERNET" SENSORS,US,HELMERS PUBLISHING, vol. 12, no. 12, 1 décembre 1995 (1995-12-01), pages 25-29,31, XP002050471 ISSN: 0746-9462

## Description

La présente invention concerne un système de suivi de production permettant de gérer un nombre variable de machines et de traiter les informations émises par les machines en temps réel qui permet une mise à jour en temps réel des informations à donner aux opérateurs des machines mais également de transmettre en temps réel les informations de production aux différents services de production, de qualité, etc ...

Dans le domaine du suivi de production, on connaît bien des systèmes constitués d'un boîtier connecté à une ou plusieurs machines - on entend par machine un équipement industriel de production qui peut être piloté par un équipement électrique traditionnel, un automate programmable ou une commande numérique -, ledit boîtier comprenant un clavier de saisie et un écran d'affichage de deux à huit lignes de caractères. Chaque boîtier comprend un microprocesseur dans lequel est enregistré un programme permettant d'effectuer le comptage des pièces produites par la machine connectée audit boîtier, de déterminer le mode de fonctionnement et d'enregistrer les défauts survenus sur la machine, le mode de fonctionnement et la saisie des défauts pouvant être saisis par l'opérateur à partir du clavier. Les informations de comptage des pièces, de mode de fonctionnement et de défauts permettent de déterminer les temps de fonctionnement de la machine dans chacun de ses modes de marche ainsi que les informations relatives à l'ordre de fabrication, ces dernières informations pouvant être lues soit au niveau du boîtier soit sur un ordinateur du type PC connecté audit boîtier ; c'est ce que l'on appelle du suivi de production assistée par ordinateur ou SPAO.

Ces systèmes de SPAO comprenant de tels boîtiers présentent de nombreux inconvénients ; en effet, ces boîtiers comprennent généralement un nombre fini et limité d'entrées, c'est-à-dire un nombre limité de possibilités de connecter des machines, de sorte qu'il est difficile d'adapter un boîtier en fonction de l'évolution des besoins des industriels, notamment lors d'une augmentation du nombre de machines ou d'une modification des machines où il est généralement nécessaire de changer les boîtiers qui sont particulièrement onéreux. Un autre inconvénient consiste dans le fait que les programmes de ces boîtiers sont réalisés en langage microprocesseur. Ce langage informatique particulièrement difficile rendant ainsi une reprogrammation du boîtier difficile, longue et, par conséquent, onéreuse. Enfin, ces boîtiers présentent un temps de cycle supérieur ou égal à 100 ms qui, compte tenu des cadences des machines actuelles, ne permet pas de traiter toutes les informations provenant de toutes les machines connectées au boîtier.

L'un des buts de l'invention est donc de remédier à tous ces inconvénients en procurant un système de suivi de production assisté par ordinateur fiable, facilement adaptable aux évolutions des machines ou des informations nécessaires pour le suivi de la production et peu onéreux.

A cet égard et conformément à l'invention, le système de suivi de production assisté par ordinateur d'un(e) ou plusieurs ateliers ou lignes de production comprenant respectivement une ou plusieurs machines est remarquable en ce qu'il est constitué d'au moins un système temps réel "primaire" comprenant au moins une entrée connectée à au moins une machine et/ou à au moins un système temps réel secondaire de la ou des machines et au moins une sortie connectée à au moins un serveur, ledit système temps réel "primaire" et/ou le système temps réel "secondaire" de la ou des machines comprenant un programme apte à déterminer les modes de fonctionnement de ladite machine et/ou les temps de fonctionnement dans chacun de ces modes, le serveur mettant sous la forme de page "web" les informations du système temps réel pour les mettre à la disposition d'ordinateurs clients des différents services production, qualité ou analogue qui sont connectés au serveur par un réseau "Intranet" ou "Ethernet" et équipés de navigateur "web" dits "browser" pour lire lesdites pages "web".

On comprend bien que le système temps réel qui consiste avantageusement dans un automate programmable ou dans la partie temps réel d'un ordinateur du type PC, permet une grande souplesse d'adaptation et présente un temps de cycle inférieur à 20 ms qui permet de traiter toutes les informations provenant des machines. En effet, un automate programmable ou une partie temps réel d'un ordinateur PC peuvent accueillir un nombre variable d'entrées, c'est-à-dire de connexion à des machines, et utilisent des langages de programmation faciles à manier de sorte qu'il n'est pas nécessaire de changer le système de suivi de production lors des évolutions de la production, tel que l'ajout de nouvelles machines par exemple, mais simplement de le reprogrammer.

Selon une variante d'exécution particulièrement avantageuse du système de suivi de production, il comprend un client léger constitué d'un ordinateur du type PC comprenant un écran, un clavier et une unité centrale sans disque dur, et connecté au serveur permettant aux opérateurs des machines de saisir les causes d'arrêt de la ou des machines et d'afficher des informations relatives à la production en cours et des fiches de qualité, de production ou de montage.

D'autres avantages et caractéristiques ressortiront mieux de la description qui va suivre, de plusieurs variantes d'exécution, données à titre d'exemples non limitatifs, du système de suivi de production assisté par ordinateur en référence aux dessins annexés sur lesquels :
- la figure 1 est une représentation schématique du système de suivi de production assisté par ordinateur conforme à l'invention,
- la figure 2 est une représentation schématique d'une première variante d'exécution du système de suivi assisté par ordinateur conforme à l'invention,
- la figure 3 est une seconde variante d'exécution du système de suivi de production assisté par ordinateur conforme à l'invention.

On décrira maintenant un exemple non limitatif d'un système de suivi de production assisté par ordinateur de plusieurs machines industrielles.

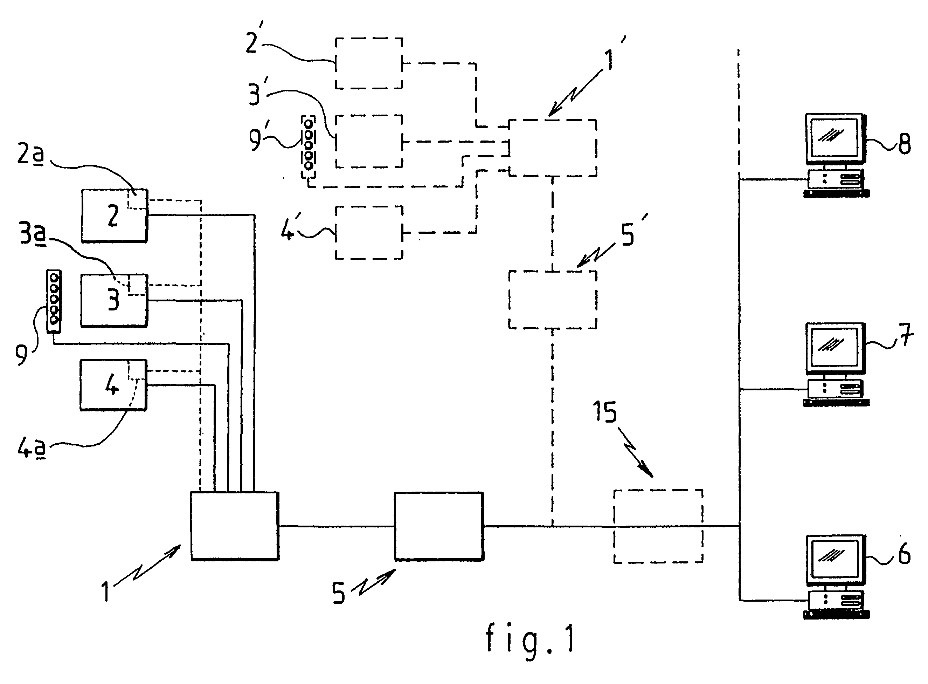

Le système de suivi de production, en référence à la figure 1, est constitué d'un système temps réel "primaire" 1 comprenant plusieurs entrées respectivement connectées à une machine 2,3 et 4 et au moins une sortie connectée à un serveur 5, ledit système temps réel primaire comprenant un programme apte à déterminer le temps de cycle de chaque machine à partir d'une prise d'informations du type "Tout Ou Rien" ou TOR telle que les informations de comptage des pièces prises sur les machines. L'information de comptage qui, sur la machine, consiste dans une impulsion électrique est transformée en une information binaire du type 0 ou 1 qui permet au programme du système temps réel "primaire" 1 de déterminer le comptage des pièces et le temps de cycle, puis d'en déduire les modes de fonctionnement de ladite machine, par exemple : la première information du cycle donne le mode réglage, un mode automatique est déduit au bout d'un certain nombre de temps de cycle et un mode arrêt est déduit après l'absence d'impulsions pendant un nombre de cycles prédéterminé. Le programme du système temps réel "primaire" 1 détermine, par ailleurs, le temps de fonctionnement de la machine dans chacun des modes décrits précédemment. Les informations reçues par le système temps réel "primaire" 1 ainsi que les informations qui en sont déduites sont transmises au serveur 5 qui met sous la forme de pages "web", c'est-à-dire sous la forme de fichiers informatiques d'extension .html ou analogue, pour les mettre à la disposition des ordinateurs clients 6,7 et 8 des différents services production, qualité ou analogue qui sont connectés au serveur 5 par un réseau "Intranet" ou "Ethernet" et équipés de navigateur "web" communément appelés "browsers", tels que "Netscape" ou "Internet Explorer" qui sont des marques déposées, pour lire lesdites pages "web".

On notera, par ailleurs, que les pages "web" du serveur 5 peuvent être lues par n'importe quel "browser" et ce, quels que soient les systèmes d'exploitation des ordinateurs clients susceptibles de les lire.

Selon une première variante d'exécution du système de suivi de production conforme à l'invention, en référence à la figure 1, les machines 2, 3 et 4 comprennent avantageusement des systèmes temps réel dits "secondaires" respectivement 2a,3a et 4a connectés en réseau à l'entrée du système temps réel "primaire" 1. De la même manière que précédemment, les systèmes temps réel "secondaires" 2a,3a et 4a comprennent respectivement un programme apte à déterminer le comptage de pièces et/ou le temps de cycle à partir d'une prise d'informations binaires telle que l'information de comptage des pièces prise sur les machines 2, 3 et 4 puis à en déduire le mode du fonctionnement desdites machines 2, 3 et 4 et/ou le temps de fonctionnement dans chacun des cycles. Ainsi, on notera que les systèmes temps réel "secondaires" 2a,3a et 4a effectuant une partie des traitements des informations, le système temps réel primaire 1 est libéré d'une partie desdits traitements, ce qui permet de connecter audit système temps réel "primaire" 1 un plus grand nombre de machines comprenant un système temps réel "secondaire" ou non tout en conservant un temps de cycle de traitement des données inférieur à 20 ms.

Selon une seconde variante d'exécution du système de suivi de production conforme à l'invention, le mode de fonctionnement des machines 2, 3 et 4 est directement transmis au système temps réel "primaire", par lesdites machines 2, 3 et 4 ou par les opérateurs de ces dernières au moyen, par exemple, d'un pupitre ou d'un boîtier de commande que l'on détaillera plus loin.

Par ailleurs, un second système temps réel primaire 1' sur les entrées duquel sont connectées des machines 2', 3' et 4' peut avantageusement être relié à un serveur 5', les serveurs 5 et 5' étant alors en réseau. De plus, des boutons de commande 9 et 9' peuvent avantageusement être positionnés à côté des machines 3 et respectivement 3' et connectés aux systèmes temps réel 1 et respectivement 1' afin de leur procurer des informations complémentaires telles que, par exemple, une cause d'arrêt relative auxdites machines 3 et 3'.

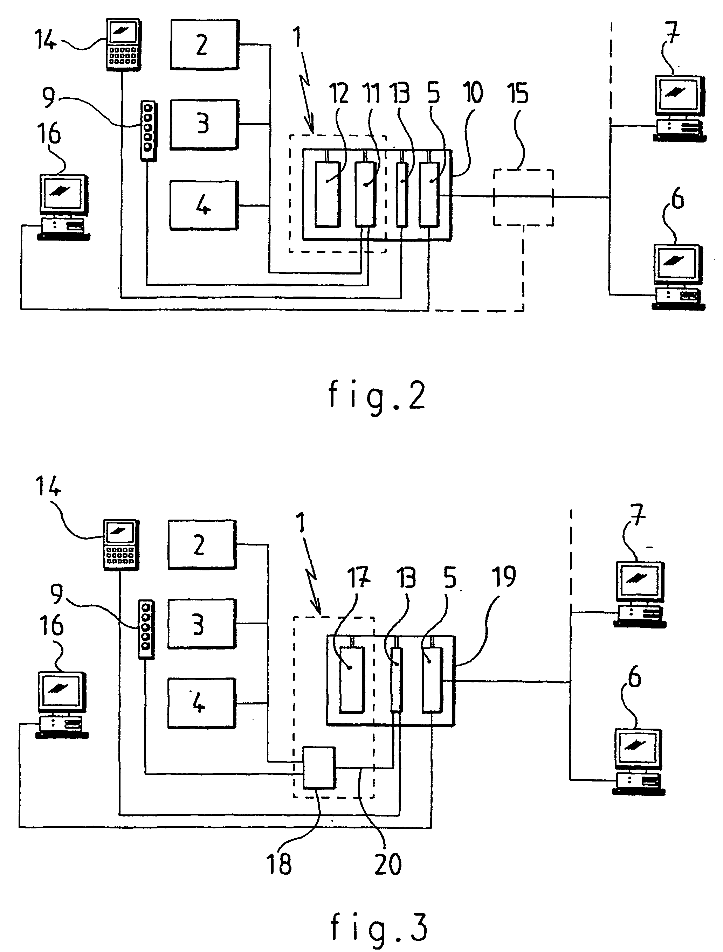

Selon une autre variante d'exécution du système de suivi de production conforme à l'invention particulièrement avantageuse, en référence à la figure 2, le système temps réel "primaire" 1 consiste dans un automate programmable comprenant un châssis 10 enfermant un bloc d'entrée/sortie 11 et une unité centrale 12 communément appelée CPU qui est l'abréviation de Control Process Unity. Par ailleurs, le bloc d'entrée/sortie 11, l'unité centrale 12 et un coupleur 13 sont connectés au châssis 10 afin de permettre le transfert d'informations entre le bloc d'entrée/sortie 11 et l'unité centrale 12 notamment.

Il va de soi que le bloc entrée/sortie 11 peut être déporté du châssis 10, c'est-à-dire positionné à l'extérieur dudit châssis 10, ledit bloc entrée/sortie 11 étant alors connecté au coupleur 13 par un bus de terrain sans pour autant sortir du cadre de l'invention.

On notera, par ailleurs que l'automate programmable 1 est une machine particulièrement fiable qui présente un temps de cycle inférieur à 20 ms, voire même inférieur à 10 ms suivant les constructeurs, et qui présente l'avantage d'être facilement programmable. Dans cet exemple non limitatif de réalisation, des machines 2,3 et 4 sont connectées aux entrées du bloc 11 de l'automate programmable 1, chaque machine étant connectée à une entrée dudit bloc 11, et le serveur 5, qui consiste dans une carte à micropresseur portant un programme et connectée à l'automate 1, est positionné dans le châssis 10 dudit automate 1, le serveur 5 étant également connecté au châssis 10. Comme on l'a déjà vu, les informations reçues par l'automate 1 sont transmises au serveur 5 qui, par l'intermédiaire de son programme informatique, met sous la forme de pages "web" lesdites informations pour les mettre à la disposition des ordinateurs clients 6,7 et 8 des différents services production, qualité ou analogue qui sont connectés au serveur 5 par un réseau "Intranet" ou "Ethernet"...

Le système de suivi de production assisté par ordinateur comprend, par ailleurs, un boîtier de commande 9 relié au bloc d'entrée/sortie 11 de l'automate programmable 1 et positionné à côté de la machine 3 afin de procurer des informations complémentaires telles que, par exemple, une cause d'arrêt relative à ladite machine 3. Le système de suivi de production comprend avantageusement un ou plusieurs pupitres opérateurs 14, dont un seul est représenté sur la figure 2 à côté de la machine 2, connecté à l'automate programmable 1 par le coupleur 13 et constitué, par exemple, d'un écran d'affichage de 16 caractères et d'un clavier. Ce pupitre opérateur 14 permet à l'opérateur de la machine 2 de saisir une cause d'arrêt et, éventuellement, d'afficher ou de saisir les quantités rebutées par ladite machine, les ordres de fabrication ou les références.

Selon une variante d'exécution du système conforme à l'invention, le pupitre opérateur 14 consiste dans un lecteur de codes barres connecté au coupleur 13 par une liaison filaire ou radio.

De plus, il est bien évident que le pupitre opérateur 14 peut consister dans un simple écran tactile, le clavier étant alors sur l'écran.

En référence aux figures 1 et 2, le système de suivi de production assisté par ordinateur comprend un serveur "Intranet" 15 connecté entre le ou les serveurs de pages "web" 5 et les ordinateurs clients 6,7 et 8 afin de permettre l'enregistrement des informations dans une base de données offrant des capacités de mémoire et de traitement des informations plus importantes. En effet, la capacité en mémoire du serveur 5 correspond environ à une semaine de données collectées, ce qui n'est pas toujours suffisant pour un suivi de la production perfectionnée qui nécessite parfois, de comparer la production d'un mois par rapport à un autre.

Par ailleurs, en référence à la figure 2, un client léger 16 est avantageusement connecté au serveur "web" 5 ou au serveur Intranet 15 positionné à côté de la machine 4 permettant à son opérateur de saisir les causes d'arrêt de ladite machine 4 et d'afficher des informations relatives à la production en cours, des fiches de qualité, de production, de montage, de réglage, de maintenance ou des plans, des photos, etc ... Le client léger 16 consiste dans un ordinateur du type PC ne possédant pas de disque dur, c'est-à-dire un ordinateur comprenant un écran, un clavier et une unité centrale constituée d'une carte mère et de cartes pour la connexion des périphériques, telles qu'une carte vidéo, une carte son, etc ... Par ailleurs, ces clients légers 16 permettent aux opérateurs de modifier certains paramètres du programme du serveur 5 tels que, par exemple, le temps de cycle théorique d'une machine ou le nombre théorique de pièces par cycle.

Il va de soi que, pour le suivi de production d'une machine comprenant un automate programmable intégré, le serveur de page "web" peut avantageusement être connecté à l'automate programmable de la machine 4, ledit serveur 5 consistant alors dans une carte à microprocesseur connectée à la sortie de l'automate à l'intérieur de son châssis, sans pour autant sortir du cadre de l'invention.

De plus, il est bien évident que le client léger 16 peut consister dans un ordinateur du type PC constitué d'un écran, d'un clavier, d'une unité centrale et d'une carte réseau, ledit ordinateur étant équipé d'un "browser".

Par ailleurs, pour le suivi de production de machines 2, 3 et 4 comprenant des systèmes temps réel "secondaire" 2a,3a,4a intégrés tels que représentés sur la figure 1, le boîtier de commande 9, le pupitre opérateur 14 et le client léger 16 peuvent avantageusement être connectés auxdits systèmes temps réel "secondaires" 2a,3a et 4a sans pour autant sortir du cadre de l'invention.

Selon une dernière variante d'exécution du système de suivi de production conforme à l'invention, en référence à la figure 3, le système temps réel "primaire" 1 consiste dans la partie temps réel 17 d'un ordinateur du type PC tel que du "hardware", c'est-à-dire du matériel informatique, ou du "software", c'est-à-dire un logiciel, et un bloc d'entrée/sortie 18. Dans cet exemple particulier de réalisation, la partie temps réel 17, le serveur 5 et le coupleur 13 sont positionnés à l'intérieur du châssis 19 de l'ordinateur et sont connectés audit châssis 19 afin de permettre le transfert d'informations entre la partie temps réel 17 et le serveur 5 notamment. Le bloc entrée/sortie 18 qui, dans cette variante d'exécution, est déporté, c'est-à-dire positionné à l'extérieur du châssis 19 et sur lequel sont connectées les machines 2,3 et 4, est relié au coupleur 13 par un bus de terrain 20 tel que, par exemple, Modbus, Profibus, etc... De la même manière que précédemment, le système de suivi de production comprend un boîtier de commande 9 connecté au système temps réel "primaire" 1 via le bloc entrée/sortie 18 et/ou un pupitre opérateur 14 connecté au coupleur 13 et/ou un client léger 16 connecté au serveur 5. On notera que dans cette variante d'exécution, le serveur 5 peut avantageusement assurer simultanément la fonction de serveur page "web" et les fonctions d'un serveur "Intranet" 15 comprenant une base de données décrites précédemment.

Il va de soi que le système de suivi de production assisté par ordinateur peut avantageusement comprendre des dispositifs de mesure analogique positionnés sur les machines 2,3 et 4 et reliés au système temps réel "primaire" 1 afin, par exemple, de contrôler la qualité des pièces et éventuellement de les trier. Les données émises par ces dispositifs de mesure analogique sont ainsi transmises au système temps réel "primaire" 1 puis au serveur 5 qui les met à la disposition des ordinateurs clients 6,7 et 8 sous la forme de pages "web" permettant ainsi d'effectuer une gestion de la qualité en plus de la gestion de production.

De plus, il est bien évident que l'entrée du système temps réel "primaire" 1 consiste dans une connexion du type "tout ou rien" ou analogique et que sa sortie consiste soit dans une connexion du type bus informatique, soit dans une connexion du type Ethernet.

Enfin, il va de soi que le système de suivi de production assisté par ordinateur peut être adapté à tous les types de machines telles que des machines à commandes numériques, par exemple, et que les exemples que l'on vient de donner ne sont que des illustrations particulières en aucun cas limitatives des domaines d'application de l'invention.

## Revendications

1. Système de suivi de production assisté par ordinateur d'un(e) ou plusieurs ateliers ou lignes de production comprenant respectivement une ou plusieurs machines (2,3,4) **caractérisé en ce qu'**il est constitué d'au moins un système temps réel "primaire" (1,1') comprenant au moins une entrée connectée à au moins une machine (2,3,4) et/ou à au moins un système temps réel "secondaire' (2a,3a,4a) de la ou des machines (2,3,4) et au moins une sortie connectée à au moins un serveur (5), ledit système temps réel "primaire" (1) et/ou le système temps réel "secondaire" (2a,3a,4a) de la ou des machines (2,3,4) comprenant un programme apte à déterminer le mode de fonctionnement de ladite machine (2,3,4) et/ou le temps de fonctionnement dans chacun de ces modes, le serveur (5) mettant sous la forme de page "web" les informations du système temps réel "primaire" (1,1') pour les mettre à la disposition d'ordinateurs clients (6,7,8) des différents services production, qualité ou analogue qui sont connectés au serveur (5) par un réseau "Intranet" ou "Ethernet" et équipés de navigateur "web" dits "browser" pour lire lesdites pages "web".

2. Système de suivi de production assisté par ordinateur selon la revendication 1 **caractérisé en ce que** le système temps réel "primaire" (1,1') et/ou le système temps réel "secondaire" (2a,3a,4a) comprend un programme apte à déterminer le comptage de pièces et/ou le temps de cycle à partir d'une prise d'informations binaires telle que l'information de comptage des pièces prise sur la machine (2,3,4) puis à en déduire le mode de fonctionnement de ladite machine (2,3,4) et/ou le temps de fonctionnement de chacun des cycles.

3. Système de suivi de production assisté par ordinateur selon la revendication 1 **caractérisé en ce que** le mode de fonctionnement de la machine (2,3,4) est directement transmis au système temps réel "primaire" (1,1') par la machine (2,3,4) ou par l'opérateur de cette dernière.

4. Système de suivi de production assisté par ordinateur selon l'une quelconque des revendications précédentes **caractérisé en ce que** le système temps réel "primaire" (1,1') consiste dans un automate programmable comprenant, une unité centrale (12) et un bloc d'entrée/sortie (11) enfermés dans un châssis (10).

5. Système de suivi de production assisté par ordinateur selon l'une quelconques des revendications 1 à 3 **caractérisé en ce que** le système temps réel "primaire" (1,1') consiste dans la partie temps réel (17) enfermés dans un châssis (19) d'un ordinateur du type PC et un bloc d'entrée/sortie (18).

6. Système de suivi de production assisté par ordinateur selon l'une quelconque des revendications précédentes **caractérisé en ce que** le serveur (5) est positionné dans le châssis (10,19) du système temps réel "primaire" (1,1'), le serveur (5) consistant alors dans une carte à microprocesseur portant un programme connectée au système temps réel "primaire" (1,1').

7. Système de suivi de production assisté par ordinateur selon la revendication 4 **caractérisé en ce que** le système temps réel "primaire" (1,1') consiste dans l'automate programmable d'une machine, le serveur (5) consistant alors dans une carte à microprocesseur portant un programme connectée à la sortie de l'automate de ladite machine (4).

8. Système de suivi de production assisté par ordinateur selon l'une quelconque des revendications précédentes **caractérisé en ce que** le bloc entrée/sortie (11,18) du système temps réel "primaire" (1,1') est positionné à l'extérieur de son châssis (10,19), ledit bloc entrée/sortie (11,18) étant connecté au système temps réel "primaire" (1,1') par des bus de terrain.

9. Système de suivi de production assisté par ordinateur selon l'une quelconque des revendications 1, 2 et 4 à 8 **caractérisé en ce qu'**il comprend un serveur "intranet" (15) connecté entre le ou les serveurs (5) et les ordinateurs clients (6,7,8).

10. Système de suivi de production assisté par ordinateur selon l'une quelconque des revendications précédentes **caractérisé en ce qu'**il comprend un client léger (16) connecté au serveur (5) ou (15) permettant aux opérateurs de saisir les causes d'arrêt de la ou des machines (2,3,4) et d'afficher des informations relatives à la production en cours, des fiches de qualité, de production, de montage, de réglage, de maintenance ou des photos, des plans, etc ....

11. Système de suivi de production assisté par ordinateur selon la revendication 10 **caractérisé en ce que** le client léger (16) est constitué d'un ordinateur du type PC comprenant un écran, un clavier, une unité centrale sans disque dur et une carte réseau du type ethernet.

12. Système de suivi de production assisté par ordinateur selon la revendication 10 **caractérisé en ce que** le client léger (16) consiste dans un ordinateur du type PC constitué d'un écran, d'un clavier, d'une unité centrale et d'une carte réseau et équipé d'un "browser".

13. Système de suivi de production assisté par ordinateur selon l'une quelconque des revendications 10 à 12 **caractérisé en ce que** le client léger (16) est connecté au serveur (5) ou (15) par une liaison filaire ou par une liaison tradio-fréquence.

14. Système de suivi de production assisté par ordinateur selon l'une quelconque des revendications précédentes **caractérisé en ce qu'**il comprend des pupitres opérateurs (14) reliés en réseau au système temps réel "primaire" (1,1') et/ou au système temps réel secondaire (2a,3a,4a) permettant à l'opérateur de saisir une cause d'arrêt de la machine (2,3,4) et, éventuellement, d'afficher ou de saisir les quantités rebutées par la machine, les ordres de fabrication ou les références.

15. Système de suivi de production assisté par ordinateur selon la revendication 14 **caractérisé en ce que** le pupitre opérateur (14) consiste dans un lecteur de codes barres connecté au système temps réel "primaire" (1,1') et/ou au système temps réel "secondaire" (2a,3a,4a) par une liaison filaire ou radio.

## Patentansprüche

1. System zum rechnergestützten Verfolgen der Produktion einer oder mehrerer Produktionswerkstätten oder -linien, aufweisend jeweils eine oder mehrere Maschinen (2, 3, 4), **dadurch gekennzeichnet, dass** es mindestens von einem "primären" Echtzeitsystem (1, 1') gebildet wird, das mindestens einen Eingang aufweist, der an mindestens eine Maschine (2, 3, 4) und/oder an mindestens ein "sekundäres" Echtzeitsystem (2a, 3a, 4a) der Maschine/n (2, 3, 4) angeschlossen ist, und mindestens einen Ausgang, der mindestens an einen Server (5) angeschlossen ist, wobei das besagte "primäre" Echtzeitsystem (1) und/oder das "sekundäre" Echtzeitsystem (2a, 3a, 4a) der Maschine/n (2, 3, 4) ein Programm aufweisen, das geeignet ist, die Funktionsweise der besagten Maschine (2, 3, 4) und/oder die Funktionszeit in jedem dieser Modi zu bestimmen, wobei der Server (5) die Informationen des "primären" Echtzeitsystems (1, 1') in Form einer Website liefert, um sie Clientrechnern (6, 7, 8) verschiedener Produktionsabteilungen, der Qualitätsabteilung u. ä. zur Verfügung zu stellen, die mit dem Server (5) über ein "Intranet"- oder "Ethernet"-System verbunden und mit Webnavigatoren, Browser genannt, ausgestattet sind, um die besagten Websites zu lesen.

2. System zum rechnergestützten Verfolgen der Produktion nach Anspruch 1, **dadurch gekennzeichnet, dass** das "primäre" Echtzeitsystem (1, 1') und/oder das "sekundäre" Echtzeitsystem ((2a, 3a, 4a) ein Programm aufweisen, das in der Lage ist, die Zählung der Teile und/oder die Zykluszeit zu bestimmen ausgehend von einer Erfassung binärer Informationen wie der Information der Zählung der Teile, die auf der Maschine (2, 3, 4) erfasst wird, und dann daraus den Funktionsmodus der besagten Maschine (2, 3, 4) und/oder die Funktionszeit jedes Zyklus' abzuleiten.

3. System zum rechnergestützten Verfolgen der Produktion nach Anspruch 1, **dadurch gekennzeichnet, dass** der Funktionsmodus der Maschine (2, 3, 4) von der Maschine (2, 3, 4) oder dem Bediener dieser direkt zum "primären" Echtzeitsystem (1, 1') übertragen wird.

4. System zum rechnergestützten Verfolgen der Produktion nach einem der vorhergehenden Ansprüche, **dadurch gekennzeichnet, dass** das "primäre" Echtzeitsystem (1, 1') aus einem programmierbaren Automaten besteht, der eine Zentraleinheit (12) und einen Eingangs/Ausgangsblock (11) aufweist, die in einem Baugruppenrahmen (10) eingeschlossen sind.

5. System zum rechnergestützten Verfolgen der Produktion nach einem der Ansprüche 1 bis 3, **dadurch gekennzeichnet, dass** das primäre Echtzeitsystem (1, 1') aus dem Echtzeitteil (17) besteht, das in einem Baugruppenrahmen (19) eines Rechners vom Typ PC eingeschlossen ist, und einem Eingangs/Ausgangsblock (18).

6. System zum rechnergestützten Verfolgen der Produktion nach einem der vorhergehenden Ansprüche, **dadurch gekennzeichnet, dass** der Server (5) im Baugruppenrahmen (10, 19) des "primären" Echtzeitsystems (1, 1') positioniert ist, wobei der Server (5) dann aus einer Karte mit Mikroprozessor mit einem Programm besteht, die an das "primäre" Echtzeitsystem (1, 1') angeschlossen ist.

7. System zum rechnergestützten Verfolgen der Produktion nach Anspruch 4, **dadurch gekennzeichnet, dass** das "primäre" Echtzeitsystem (1, 1') aus dem programmierbaren Automaten einer Maschine besteht, wobei der Server (5) dann aus einer Karte mit Mikroprozessor mit einem Programm besteht, die an den Ausgang des Automaten der besagten Maschine (4) angeschlossen ist.

8. System zum rechnergestützten Verfolgen der Produktion nach einem der vorhergehenden Ansprüche, **dadurch gekennzeichnet, dass** der Eingangs/Ausgangsblock (11, 18) des "primären" Echtzeitsystems (1, 1') außerhalb seines Baugruppenrahmens (10, 19) positioniert ist, wobei der besagte Eingangs/Ausgangsblock (11, 18) an das "primäre" Echtzeitsystem durch Feldbusse angeschlossen ist.

9. System zum rechnergestützten Verfolgen der Produktion nach einem der Ansprüche 1, 2 und 4 bis 8, **dadurch gekennzeichnet, dass** es einen "Intranet"-Server (15) aufweist, der zwischen dem oder den Servern (5) und den Clientrechnern (6, 7, 8) geschaltet ist.

10. System zum rechnergestützten Verfolgen der Produktion nach einem der vorhergehenden Ansprüche, **dadurch gekennzeichnet, dass** es einen Thin Client (16) aufweist, der an den Server (5) oder (15) angeschlossen ist und den Bedienern erlaubt, die Gründe für den Stillstand der Maschine/n (2, 3, 4) zu erfassen und Informationen, die sich auf die laufende Produktion beziehen, Qualitäts-, Produktions-, Montage-, Regelungs- und Wartungsdatenblätter oder Fotos, Pläne usw. anzuzeigen.

11. System zum rechnergestützten Verfolgen der Produktion nach Anspruch 10, **dadurch gekennzeichnet, dass** der Thin Client (16) von einem Rechner vom Typ PC gebildet wird, der einen Bildschirm, eine Tastatur, eine Zentraleinheit ohne Festplatte und eine Netzkarte vom Typ Ethernet aufweist.

12. System zum rechnergestützten Verfolgen der Produktion nach Anspruch 10, **dadurch gekennzeichnet, dass** der Thin Client (16) aus einem Rechner vom Typ PC besteht, der von einem Bildschirm, einer Tastatur, einer Zentraleinheit und einer Netzkarte gebildet wird und mit einem Browser ausgerüstet ist.

13. System zum rechnergestützten Verfolgen der Produktion nach einem der Ansprüche 10 bis 12, **dadurch gekennzeichnet, dass** der Thin Client (16) an den Server (5) oder (15) durch eine Kabel- oder Funkverbindung angeschlossen ist.

14. System zum rechnergestützten Verfolgen der Produktion nach einem der vorhergehenden Ansprüche, **dadurch gekennzeichnet, dass** es Bedienpulte (14) aufweist, die mit dem "primären" Echtzeitsystem (1, 1') und/oder mit dem "sekundären" Echtzeitsystem (2a, 3a, 4a) vernetzt sind und dem Bediener erlaubt, einen Grund für den Stillstand der Maschine (2, 3, 4) zu erfassen und eventuell die von der Maschine verworfenen Mengen, Herstellungsbefehle oder Referenzen anzuzeigen oder zu erfassen.

15. System zum rechnergestützten Verfolgen der Produktion nach Anspruch 14, **dadurch gekennzeichnet, dass** das Bedienpult (14) aus einem Strichcodeleser besteht, der an das "primäre" Echtzeitsystem (1, 1') und/oder das "sekundäre" Echtzeitsystem (2a, 3a, 4a) durch eine Kabeloder Funkverbindung angeschlossen ist.

## Claims

1. A computer-aided system for monitoring production of one or more plants or production lines comprising respectively one or more machines (2, 3, 4), **characterised in that** it is constituted by at least a 'primary' real-time system (1, 1') comprising at least an input connected to at least a machine (2, 3, 4) and/or to at least a 'secondary' real-time system (2a, 3a, 4a) of the machine or machines (2, 3, 4), and at least an output connected to at least a server (5), said 'primary' real-time system (1) and/or the 'secondary' real-time system (2a, 3a, 4a) of the machine or machines (2, 3, 4) comprising a program for determining the operating mode of said machine (2, 3, 4) and/or the operating time in each of these modes, the server (5) formatting the data of the 'primary' real-time system (1,1') as "web" pages to supply them to client computers (6, 7, 8) of the various production, quality or similar services which are connected to the server (5) by an "Intranet" or "Ethernet" network and provided with a navigator "web" or "browser" for reading said "web" pages.

2. The computer-aided system for monitoring production as claimed in Claim 1, **characterised in that** the 'primary' real-time system (1, 1') and/or the 'secondary' real-time system (2a, 3a, 4a) comprises a program for determining the counting of pieces and/or the cycle time from taking binary data such as counting data of the pieces done on the machine (2, 3, 4), then for deducing the operating mode of said machine (2, 3, 4) and/or the operating time of each of the cycles.

3. The computer-aided system for monitoring production as claimed in Claim 1, **characterised in that** the operating mode of the machine (2, 3, 4) is directly transmitted to the 'primary' real-time system (1, 1') by the machine (2, 3, 4) or by the operator of the latter.

4. The computer-aided system for monitoring production as claimed in any one of the preceding claims, **characterised in that** the 'primary' real-time system (1, 1') consists of a programmable processing automaton comprising a central unit (12) and an input/output block (11) enclosed in a frame (10).

5. The computer-aided system for monitoring production as claimed in any one of Claims 1 to 3, **characterised in that** the 'primary' real-time system (1, 1') consists of the real-time part (17) enclosed in a frame (19) of a PC type computer and an input/output block (18).

6. The computer-aided system for monitoring production as claimed in any one of the preceding claims, **characterised in that** the server (5) is positioned in the frame (10, 19) of the 'primary' real-time system (1, 1'), whereby the server (5) consists of a microprocessor card with a program connected to the 'primary' real-time system (1, 1').

7. The computer-aided system for monitoring production as claimed in Claim 4, **characterised in that** the 'primary' real-time system (1, 1') consists of the programmable processing automaton of a machine, whereby the server (5) consists of a microprocessor card with a program connected to the output of the processing automaton of said machine (4).

8. The computer-aided system for monitoring production as claimed in any one of the preceding claims, **characterised in that** the input/output block (11, 18) of the 'primary' real-time system (1, 1') is positioned outside its frame (10,19), whereby said input/output block (11, 18) is connected to the 'primary' real-time system (1, 1') by field buses.

9. The computer-aided system for monitoring production as claimed in any one of Claims 1, 2 and 4 to 8, **characterised in that** it comprises an "intranet" server (15) connected between the server or servers (5) and the client computers (6, 7, 8).

10. The computer-aided system for monitoring production as claimed in any one of the preceding claims, **characterised in that** it comprises a thin client (16) connected to the server (5) or (15), allowing the operators to detect the causes of machine stoppage (2, 3, 4) and to display data relative to current production, connectors of quality, production, installation, control, maintenance or photos, plans, etc.

11. The computer-aided system for monitoring production as claimed in Claim 10, **characterised in that** the thin client (16) is constituted by a PC type computer comprising a monitor, a keyboard, a central unit without a hard drive and a network card of Ethernet type.

12. The computer-aided system for monitoring production as claimed in Claim 10, **characterised in that** the thin client (16) consists of PC type computer constituted by a monitor, a keyboard, a central unit and a network card, and is equipped with a "browser".

13. The computer-aided system for monitoring production as claimed in any one of Claims 10 to 12, **characterised in that** the thin client (16) is connected to the server (5) or (15) by a wired connection or by a radiofrequency connection.

14. The computer-aided system for monitoring production as claimed in any one of the preceding claims, **characterised in that** it comprises operating consoles (14) networked to the 'primary' real-time system (1, 1') and/or to the 'secondary' real-time system (2a, 3a, 4a), allowing the operator to detect a cause of machine stoppage (2, 3, 4) and, optionally, to display or collect quantities discarded by the machine, manufacturing orders or references.

15. The computer-aided system for monitoring production as claimed in Claim 14, **characterised in that** the operating console (14) consists of a barcode reader connected to the 'primary' real-time system (1, r) and/or to the 'secondary' real-time system (2a, 3a, 4a) by a wired or radio connection.
